# NEUE EUROPÄISCHE PATENTSCHRIFT

(11) **EP 2 929 176 B2**
(45) Veröffentlichungstag und Bekanntmachung des Hinweises auf die Entscheidung über den Einspruch: **19.07.2023**
(45) Hinweis auf die Patenterteilung: 12.09.2018
(21) Anmeldenummer: 13805321.0
(22) Anmeldetag: 05.12.2013
(51) Int. Cl.: F03D 13/10, F15B 15/18, F15B 15/26, F15B 15/02

(54) **TURNANTRIEB FÜR EINE WINDENERGIEANLAGE UND VERFAHREN ZUM DREHEN DER ROTORWELLE EINER WINDENERGIEANLAGE**
TURN DRIVE FOR A WIND TURBINE AND METHOD FOR ROTATING THE ROTOR SHAFT OF A WIND TURBINE
DISPOSITIF D'ENTRAÎNEMENT EN ROTATION DESTINÉ À UNE ÉOLIENNE ET PROCÉDÉ SERVANT À FAIRE TOURNER L'ARBRE DE ROTOR D'UNE ÉOLIENNE

(30) Priorität: 10.12.2012 DE 102012222637
(43) Veröffentlichungstag der Anmeldung: 14.10.2015
(73) Patentinhaber: Siemens Gamesa Renewable Energy Service GmbH, 20097 Hamburg (DE)
(72) Erfinder: BROKES, Michael, 28211 Bremen (DE); EDELMANN, Ulf, 24787 Fockbek (DE); EUSTERBARKEY, Carsten, 25813 Simonsberg (DE); LEHMANN, Sven, 24787 Fockbek (DE)
(74) Vertreter: Glawe, Delfs, Moll
(86) Internationale Anmeldenummer: PCT/EP2013/075734
(87) Internationale Veröffentlichungsnummer: WO 2014/090690

(56) Entgegenhaltungen:
- EP-A1- 0 299 326
- EP-A1- 2 159 472
- EP-A1- 2 159 472
- EP-A2- 1 167 754
- EP-A2- 2 072 814
- EP-A2- 2 072 814
- EP-A2- 2 116 722
- EP-A2- 2 116 722
- EP-A2- 2 466 124
- WO-A1-2011/095655
- WO-A1-2012/052022
- WO-A2-2011/003405
- WO-A2-2011/003405
- DE-A1- 1 956 178
- DE-A1- 3 125 087
- DE-A1- 10 334 448
- DE-A1-102008 022 383
- DE-A1-102009 034 116
- DE-C2- 3 127 439
- DE-U1- 20 201 623
- DE-U1- 20 212 459
- DE-U1- 20 212 459
- US-A1- 2008 181 761
- US-A1- 2011 027 061
- US-A1- 2011 027 061
- "Druckventil", Wikipedia, 22 March 2018 (2018-03-22), Retrieved from the Internet: URL:https://de.wikipedia.org/wiki/Druckven til
- "Relief valve", Wikipedia, 22 January 2019 (2019-01-22), Retrieved from the Internet: URL:https://en.wikipedia.org/wiki/Relief_v alve
- "Liste der Schaltzeichen", Wikipedia, 17 March 2019 (2019-03-17), Retrieved from the Internet: URL:https://de.wikipedia.org/wiki/Liste_de r_Schaltzeichen_(Fluidtechnik)
- MONIKA ZWETTLER: "Konstruktionspraxis", In Windkraftanlagen stecken leistungsstarke Bremsen, 2 February 2011 (2011-02-02), Retrieved from the Internet: URL:https://www.konstruktionspraxis.vogel. de/in-windkraftanlagen-stecken-leistungsst arke-bremsen-a-301583
- "Fluid Motor Circuits", Hydraulics & Pneumatics, 18 March 2009 (2009-03-18), Retrieved from the Internet: URL:https://www.hydraulicspneumatics.com/o ther-technologies/book-2-chapter-2-fluid-m otor-circuits
- "Pressure-relief valves", Hydraulics & Pneumatics, 23 April 2010 (2010-04-23), Retrieved from the Internet: URL:https://www.hydraulicspneumatics.com/o ther-technologies/book-2-chapter-18-pressu re-relief-valves
- "Motor", Wikipedia, 1 April 2019 (2019-04-01), Retrieved from the Internet: URL:https://de.wikipedia.org/wiki/Motor
- Sauer_Danfoss_Orbitalmotoren_2001

## Beschreibung

Die Erfindung betrifft einen Turnantrieb für eine Windenergieanlage. Der Turnantrieb umfasst eine Welle, einen Hydromotor zum Antreiben der Welle und eine Antriebsleitung, um dem Hydromotor eine unter Druck stehende Hydraulikflüssigkeit zuzuführen. Die Erfindung betrifft außerdem ein Verfahren zum Drehen der Rotorwelle einer Windenergieanlage.

Bei der Errichtung von Windenergieanlagen wird regelmäßig zunächst die Gondel auf einem Turm montiert und anschließend der Rotor mit der Gondel verbunden. Wenn die Rotorblätter einzeln an der Nabe des Rotors montiert werden, wird normalerweise so vorgegangen, dass die Nabe des Rotors in eine vorgegebene Winkelposition gedreht wird, so dass das Rotorblatt aus einer vorgegebenen Richtung an die Nabe herangeführt werden kann. Für die Montage des nachfolgenden Rotorblatts wird die Nabe so gedreht, dass das nachfolgende Rotorblatt aus derselben Richtung an die Nabe herangeführt werden kann. Hat beispielsweise der Rotor drei Rotorblätter, wird die Nabe zwischen der Montage zweier Rotorblätter um 120° gedreht.

In dem Zwischenstadium, in dem lediglich ein Teil der Rotorblätter an die Nabe angeschlossen ist, hat der Rotor eine starke Unwucht. Es ist folglich ein großes Drehmoment erforderlich, um die Winkelposition des Rotors zu ändern. Eine Vorrichtung, die direkt auf die Rotorwelle wirkt, um dieses Drehmoment aufzubringen, ist beispielsweise in EP 1 659 286 beschrieben.

Wenn ein Getriebe zwischen dem Rotor und dem Generator der Windenergieanlage vorgesehen ist, kann die Übersetzung des Getriebes genutzt werden, um das aufzubringende Drehmoment zu vermindern. Es wird dazu ein Turnantrieb an die schnelle Welle des Getriebes angeschlossen. Das auf die schnelle Getriebewelle wirkende Drehmoment des Turnantriebs erhöht sich gemäß dem Übersetzungsverhältnis des Getriebes, so dass der Turnantrieb nur ein verhältnismäßig geringes Drehmoment aufbringen muss, um den Rotor trotz der Unwucht zu drehen. Vorrichtungen, die zum Drehen des Getriebes an der schnellen Getriebewelle angreifen, sind beispielsweise in EP 1 167 754, EP 2 116 722 und DE 103 34 448 beschrieben. Es stellt sich bei dieser Vorgehensweise das Problem, dass über das Getriebe ein Drehmoment übertragen wird, das in der Nähe der Belastungsgrenzen des Getriebes liegt. Kommen, beispielsweise infolge einer Bö, weitere Kräfte hinzu, kann die Belastungsgrenze überschritten werden. Eine Überlastung des Getriebes ist jedoch zu vermeiden, damit sich nicht schon vor der ersten Inbetriebnahme der Windenergieanlage Schäden an dem Getriebe ausbilden. Aus EP 2 159 472 ist ein Turnantrieb gemäß dem Oberbegriff von Anspruch 1 bekannt. Der Erfindung liegt die Aufgabe zu Grunde, einen Turnantrieb und ein Verfahren zum Drehen der Rotorwelle einer Windenergieanlage vorzustellen, mit denen eine Überlastung des Getriebes vermieden wird. Ausgehend vom genannten Stand der Technik wird die Aufgabe gelöst mit den Merkmalen der unabhängigen Ansprüche. Vorteilhafte Ausführungsformen finden sich in den Unteransprüchen.

Erfindungsgemäß ist bei dem Turnantrieb die Antriebsleitung mit einem einstellbaren Druckbegrenzungsventil versehen. Durch Einstellen des Druckbegrenzungsventils kann der Druck variiert werden, bei dem das Druckbegrenzungsventil öffnet. Mit dem einstellbaren Druckbegrenzungsventil wird das auf das Getriebe übertragbare Drehmoment begrenzt.

Zum Antrieb des Hydromotors wird eine Hydraulikflüssigkeit durch die Antriebsleitung in den Hydromotor geleitet. Das Drehmoment, mit dem die Welle angetrieben wird, ist im Wesentlichen proportional zu dem Druck, mit dem die Hydraulikflüssigkeit in den Hydromotor eintritt. Mit dem erfindungsgemäßen Druckbegrenzungsventil wird erreicht, dass der Druck in der Antriebsleitung einen vorgegebenen Schwellwert nicht überschreiten kann. Bei einer Überschreitung des Schwellwerts öffnet das Druckbegrenzungsventil und ein Teil der Hydraulikflüssigkeit wird durch das Druckbegrenzungsventil abgeleitet. Mit dem begrenzten Druck ist auch das auf die Welle wirkende Drehmoment begrenzt, so dass eine Überlastung des an die Welle angeschlossenen Getriebes ausgeschlossen ist. Der Druck, bei dem das Druckbegrenzungsventil öffnet, ist vorzugsweise so gewählt, dass der Druck auf einen Wert begrenzt wird, der dem maximalen Drehmoment entspricht, mit dem das Getriebe belastet werden darf. Ist das Drehmoment des Rotors größer als die Drehmomentschwelle, bei der das Druckbegrenzungsventil öffnet, kann der Turnantrieb den Rotor nicht weiter drehen. Dies wird in Kauf genommen und hat zur Folge, dass beispielsweise während einer Bö der Rotor stillsteht oder sich gar in entgegengesetzter Richtung dreht. Nach dem Ende der Bö reicht das Drehmoment des Turnantriebs wieder aus, um den Rotor zu drehen und der Rotor setzt sich in der betreffenden Richtung erneut in Bewegung. Indem das Druckbegrenzungsventil einstellbar ausgeführt ist, kann der Turnantrieb leicht an z.B unterschiedliche Rotorblätter und/oder unterschiedliche Umgebungsbedingungen angepasst werden.

Der Begriff Leitung ist nicht als Einschränkung in einem strukturellen Sinne zu verstehen. Von der Erfindung umfasst ist also beispielsweise auch ein Druckbegrenzungsventil, das im Gehäuse des Hydromotors angeordnet ist und dort an den Kanal der Hydraulikflüssigkeit angeschlossen ist. Regelmäßig werden Hydromotoren mit je einer Antriebsleitung pro Drehrichtung versorgt. Vorzugsweise ist in jeder Antriebsleitung ein Druckbegrenzungsventil vorgesehen, so dass der Drehmoment-Schwellwert in beiden Drehrichtungen eingehalten wird. Es kann auch eine einzelne Antriebsleitung mit einer Mehrzahl von Druckbegrenzungsventilen ausgestattet sein. Dies hat den Vorteil, dass das übertragbare Drehmoment auch dann noch begrenzt ist, wenn eines der Druckbegrenzungsventile defekt ist. Umfasst der Turnantrieb eine Mehrzahl von Antriebsleitungen, kann jede der Antriebsleitungen mit einer Mehrzahl von Druckbegrenzungsventilen ausgestattet sein.

Die Leistung des Hydromotors hängt davon ab, wie viel Hydraulikflüssigkeit dem Hydromotor durch die Antriebsleitung zugeführt wird. In der Antriebsleitung kann ein Ventil angeordnet sein, um den Fluss der Hydraulikflüssigkeit durch die Antriebsleitung einzustellen. Vorzugsweise handelt es sich um ein Proportionalventil, das einen kontinuierlichen Übergang zwischen einer geöffneten Stellung und einer geschlossenen Stellung ermöglicht. Der Turnantrieb kann eine Steuerung umfassen, die dazu ausgelegt ist, das Proportionalventil passend einzustellen.

Ein Hydromotor ist aufgrund von Leckfluss im Allgemeinen nicht geeignet, den Rotor in einer bestimmten Position zu arretieren. Um dennoch ein Arretieren des Rotors zu ermöglichen, ist der Turnantrieb vorzugsweise mit einer mechanischen Bremse für die Welle ausgestattet. Die Bremse kann eine Lamellenbremse sein, bei der ein Reibschluss erzeugt werden kann zwischen einem ersten Teil, das sich mit der Welle dreht, und einem zweiten Teil, das sich nicht mit der Welle dreht. Die Lamellenbremse kann mit nasslaufenden ölgekühlten Lamellen ausgestattet sein. Die Lamellenbremse kann durch eine Bewegung in Axialrichtung der Welle in Eingriff gebracht werden.

Für die Betätigung der Bremse kann ein hydraulisches Stellglied vorgesehen sein. Es kann eine Bremsleitung vorgesehen sein, die an das hydraulische Stellglied angeschlossen ist und mit der dem Stellglied Hydraulikflüssigkeit zugeführt werden kann. Damit sich die Bremse bei einem Ausfall des Hydraulikaggregats nicht unkontrolliert löst, ist die Bremse vorzugsweise so eingerichtet, dass sie drucklos in Eingriff ist. Die Bremse wird gelöst, indem die Hydraulikflüssigkeit in dem Stellglied unter Druck gesetzt wird.

Auch wenn die Welle durch die Bremse arretiert ist, sollen keine Überlasten auf das Getriebe wirken. Die Bremse ist deswegen erfindungsgemäß auf ein vorgegebenes Durchrutschmoment einstellbar. Das Durchrutschmoment der Bremse stimmt vorzugsweise überein mit dem Drehmoment-Schwellwert, bei dem das Druckbegrenzungsventil in der Antriebsleitung öffnet. Es gibt dann ein einheitliches maximales Drehmoment, das von dem Hydromotor oder der Bremse auf die schnelle Getriebewelle ausgeübt wird. Zum Einstellen des Durchrutschmoments kann in der Bremsleitung ein einstellbarer Druckminderer angeordnet sein. Mit dem Druckminderer kann der Druck in dem Stellglied auf einem konstanten Wert gehalten werden, auch wenn der von dem Hydraulikaggregat gelieferte Druck sich ändert.

Wenn der Hydromotor und die Bremse gleichzeitig auf die Welle einwirken, besteht das Risiko, dass das Drehmoment in Summe höher ist als für das Getriebe zulässig. In einer vorteilhaften Ausführungsform sind der Hydromotor und die Bremse deswegen so miteinander gekoppelt, dass das gemeinsam auf die Welle ausgeübte Drehmoment einen vorgegebenen Schwellwert nicht überschreitet. Der vorgegebene Schwellwert kann übereinstimmen mit dem maximalen Drehmoment, das der Hydromotor bzw. die Bremse einzeln auf die Welle ausüben können.

Für die Kopplung zwischen der Bremse und dem Hydromotor kann eine Verbindungsleitung vorgesehen sein, die sich zwischen dem Hydromotor und der Bremse erstreckt. Die Verbindungsleitung kann so mit der Bremsleitung gekoppelt sein, dass auf das Stellglied der Bremse der höhere der beiden Drücke wirkt. Beispielsweise können die Verbindungsleitung und die Bremsleitung über ein Wechselventil miteinander verbunden sein. Der höhere Druck, der in der Antriebsleitung anliegt, wenn der Hydromotor in Betrieb ist, überträgt sich dann automatisch auf das Stellglied der Bremse und hat zur Folge, dass die Bremse gelöst wird. Das Drehmoment von der Bremse und das Drehmoment des Hydromotors können sich also nicht aufaddieren.

Übt der Rotor ein Drehmoment auf den Turnantrieb aus, das größer ist als der Schwellwert, beginnt die Bremse zu rutschen. Ohne Schaden zu nehmen, hält die Bremse diesen Zustand nur für eine kurze Zeitspanne aus. Es kann deswegen eine Hilfs-Bremsleitung vorgesehen sein, über die dem Stellglied unter Umgehung des einstellbaren Druckminderers Hydraulikflüssigkeit zugeführt werden kann. Über die Hilfs-Bremsleitung kann das Stellglied unter Druck gesetzt werden und die Bremse damit gelöst werden, nachdem die Bremse über eine vorgegebene Zeitspanne durchgerutscht ist. Allerdings ist nicht erwünscht, dass der Turnantrieb einer Drehung des Rotors ohne Widerstand folgt. Gleichzeitig mit dem Lösen der Bremse wird deswegen vorzugsweise das Proportionalventil in der Antriebsleitung geöffnet, so dass der Hydromotor dem Rotor ein Drehmoment entgegensetzt. Das Proportionalventil wird vorzugsweise so eingestellt, dass das Drehmoment des Hydromotors dem Drehmoment-Schwellwert entspricht. Der Turnantrieb kann eine Steuerung umfassen, die ein entsprechendes Zusammenwirken eines Ventils in der Hilfs-Bremsleitung mit dem Proportionalventil veranlasst.

Bevor mit dem erfindungsgemäßen Turnantrieb ein hohes Drehmoment angelegt wird, sollte das Getriebe in einer Getriebevorbereitungsphase für eine vorgegebene Zeitspanne ohne Last gedreht werden. Die Pumpen, mit denen das Getriebeöl umgewälzt wird, können in der Getriebevorbereitungsphase in Betrieb sein, so dass das Getriebeöl in Bewegung gehalten wird und sich erwärmt.

In der Getriebevorbereitungsphase sollte der Turnantrieb, der bereits an die schnelle Getriebewelle angeschlossen ist, ohne Last mitlaufen. Der Hydromotor kann zu diesem Zweck mit einer Kurzschlussleitung versehen sein, so dass der Hydromotor die Hydraulikflüssigkeit ohne größeren Widerstand umwälzen kann. Parallel kann über die Hilfs-Bremsleitung das Stellglied der Bremse unter Druck stehen, so dass die Bremse geöffnet ist.

Zur Kontrolle, dass das auf das Getriebe ausgeübte Drehmoment tatsächlich unterhalb des vorgegebenen Drehmoment-Schwellwerts bleibt, kann das Drehmoment gemessen werden, das zwischen der Antriebseinheit des Turnantriebs und der Struktur der Windenergieanlage wirkt. Dieses Drehmoment entspricht dem Drehmoment, das von dem Turnantrieb auf die schnelle Getriebewelle übertragen wird. Ein Drehmomentsensor kann vorgesehen sein, um das Drehmoment zwischen Turnantrieb und Struktur der Windenergieanlage direkt zu messen. In einer vorteilhaften Ausführungsform umfasst der Turnantrieb eine Stütze, über die der Turnantrieb mit der Struktur der Windenergieanlage verbunden wird und es wird das auf die Stütze ausgeübte Drehmoment gemessen. In einer vorteilhaften Ausführungsform ist die Stütze des Turnantriebs dazu ausgelegt, mit den Bremskonsolen der Haltebremse der schnellen Getriebewelle verbunden zu werden. Die Stütze kann eine Mehrzahl von gelenkig aufgehängten Streben umfassen. Durch die gelenkige Aufhängung werden Querkräfte vermieden, falls die Antriebseinheit nicht exakt zentrisch zu der schnellen Getriebewelle ausgerichtet ist. Die Antriebseinheit bezeichnet den Teil des Turnantriebs, der den Hydromotor und/oder die Bremse umfasst.

Der Turnantrieb kann einen Druckspeicher umfassen, so dass der Druck der Hydraulikflüssigkeit für eine vorgegebene Zeitspanne auch dann aufrechterhalten werden kann, wenn das Hydraulikaggregat ausfällt. Der Druckspeicher kann auf die Bremsleitung und/oder die Hilfs-Bremsleitung wirken.

Der Drehmoment-Schwellwert, auf den der Turnantrieb eingestellt ist, kann beispielsweise zwischen 30 kNm und 100 kNm, vorzugsweise zwischen 50 kNm und 70 kNm liegen. Der Druck, bei dem das Druckbegrenzungsventil öffnet, kann beispielsweise zwischen 100 bar und 400 bar betragen. Der Druck zum vollständigen Öffnen der Bremse kann beispielsweise zwischen 10 bar und 30 bar liegen. Der Druck, mit dem die Bremse auf ein dem Drehmoment-Schwellwert entsprechendes Durchrutschmoment eingestellt wird, kann beispielsweise zwischen 5 bar und 15 bar liegen.

Wenn die Nabe des Rotors in die richtige Winkelposition für die Montage des Rotorblatts gebracht ist, wird die Rotorwelle vorzugsweise fest arretiert. Es kann dazu eine Arretiervorrichtung vorgesehen sein, die die Rotorwelle relativ zu der Struktur der Windenergieanlage fixiert. Um die Arretiervorrichtung nach der Montage des Rotorblatts wieder zu lösen, wird die Arretiervorrichtung zunächst in eine lastfreie Position gebracht. Die Rotorwelle wird dazu mit Hilfe des Turnantriebs entgegen der Last gedreht, bis die Arretiervorrichtung freikommt. Die Arretiervorrichtung kann dann gelöst werden, so dass die Rotorwelle wieder frei drehbar ist.

Der Turnantrieb kann in dieser Phase von Hand bedient werden, indem eine Bedienperson die Arretiervorrichtung beobachtet und den Turnantrieb entsprechend in Betrieb setzt. In einer vorteilhaften Ausführungsform ist der Turnantrieb so ausgelegt, dass dieser Vorgang automatisch abläuft. Der Turnantrieb kann dazu einen Signaleingang aufweisen, über den dem Turnantrieb eine Information über den Zustand der Arretiervorrichtung zugeführt werden kann. Die Steuerung des Turnantriebs kann so ausgelegt sein, dass sie den Hydromotor entgegen der Last der Arretiervorrichtung in Gang setzt, bis sie über den Signaleingang die Information erhält, dass die Arretiervorrichtung lastfrei ist. Dann wird der Hydromotor gestoppt und die Bremse auf das vorgegebene Durchrutschmoment eingestellt, so dass die Arretiervorrichtung gelöst werden kann.

Die Erfindung betrifft außerdem ein System aus einem Turnantrieb und einer Arretiervorrichtung für die Rotorwelle, wobei die Arretiervorrichtung für eine automatische Betätigung ausgelegt ist. Die Arretiervorrichtung kann also beispielsweise mittels eines Signals von einer Steuerung gelöst werden und in Eingriff gebracht werden. Auf diese Weise wird es möglich, die jeweiligen Rotorpositionen vollautomatisch anzufahren. Geht man davon aus, dass im Ausgangszustand die Arretiervorrichtung in Eingriff steht, umfasst das Verfahren die folgenden Schritte. Zunächst wird der Hydromotor in Gang gesetzt, so dass die Arretiervorrichtung entlastet wird. Im entlasteten Zustand der Arretiervorrichtung wird die Lamellenbremse in Eingriff gebracht. Anschließend wird die Arretiervorrichtung gelöst, was vorzugsweise durch ein Steuersignal ausgelöst wird. Der Hydromotor wird wieder in Gang gesetzt, um die nächste Rotorposition anzufahren. Ist die gewünschte Rotorposition erreicht, wird die Lamellenbremse erneut in Eingriff gebracht. Die Arretiervorrichtung wird in Eingriff gebracht. Zum Schluss wird die Lamellenbremse gelöst und der Turnantrieb entlastet. In diesem Zustand kann das nächste Rotorblatt montiert werden. Vorzugsweise stehen der Hydromotor, die Lamellenbremse und die Arretiervorrichtung bei diesem Ablauf unter der Kontrolle einer gemeinsamen Steuereinheit.

Es ist wünschenswert, dass bei der Montage der einzelnen Rotorblätter nicht nur tatsächlich die vorgeschriebenen Drehmomentgrenzen eingehalten werden, sondern dass auch eine entsprechende Dokumentation vorliegt. Eine solche Dokumentation ist hilfreich, damit bei der Übergabe der Windenergieanlage Zusagen im Hinblick auf einen einwandfreien Zustand des Getriebes abgegeben werden können. Der Turnantrieb kann deswegen einen Datenlogger umfassen, der Informationen aufzeichnet, aus denen sich Rückschlüsse auf die Belastungen ziehen lassen, denen das Getriebe während der Montage ausgesetzt war. Diese Informationen können beispielsweise umfassen den Druck der Hydraulikflüssigkeit in dem Hydromotor, das Drehmoment zwischen dem Hydromotor und der Struktur der Windenergieanlage, die Öltemperatur des Getriebes der Windenergieanlage, die Windgeschwindigkeit und Windrichtung und/oder die Winkelposition der langsamen Welle des Getriebes der Windenergieanlage. Vorzugsweise ist der Turnantrieb mit entsprechenden Sensoren ausgestattet bzw. mit Signaleingängen für Informationen von externen Sensoren. Der Datenlogger sollte die betreffenden Daten zumindest dann aufzeichnen, wenn der Turnantrieb in Betrieb ist und die Arretiervorrichtung der Rotorwelle gelöst ist. Für eine vollständige Dokumentation kann die Aufzeichnung der Daten auch in den Phasen fortgeführt werden, in denen die Rotorwelle mit der Arretiervorrichtung arretiert ist.

Die Erfindung betrifft außerdem eine Anordnung aus einem solchen Turnantrieb bzw. System und einem Getriebe einer Windenergieanlage, wobei die Welle des Turnantriebs mit der schnellen Getriebewelle in Eingriff steht. Vorzugsweise ist die Welle des Turnantriebs konzentrisch zu der schnellen Welle des Getriebes ausgerichtet.

Die Erfindung betrifft außerdem ein Verfahren zum Drehen einer an ein Getriebe angeschlossenen Rotorwelle einer Windenergieanlage. Bei dem Verfahren wird ein Turnantrieb an die schnelle Getriebewelle angeschlossen, wobei der Turnantrieb mit einem Hydromotor ausgestattet ist. Ein Druckbegrenzungsventil in einer Antriebsleitung des Hydromotors wird auf einen vorgegebenen Schwellwert eingestellt, um das auf das Getriebe übertragbare Drehmoment zu begrenzen. Es wird eine unter Druck stehende Hydraulikflüssigkeit dem Hydromotor zugeführt, wobei das Druckbegrenzungsventil öffnet, wenn der Druck der Hydraulikflüssigkeit den vorgegebenen Schwellwert überschreitet. Das Verfahren kann mit weiteren Merkmalen fortgebildet werden, die im Zusammenhang des erfindungsgemäßen Turnantriebs beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: verschiedene Stadien (A bis E) bei der Einzelmontage der Rotorblätter;
- Fig. 2:: eine schematische Darstellung eines Triebstrangs einer Windenergieanlage;
- Fig. 3:: eine Antriebseinheit eines erfindungsgemäßen Turnantriebs;
- Fig. 4 bis 6:: verschiedene Stadien beim Anschließen des erfindungsgemäßen Turnantriebs an die schnelle Welle des Getriebes einer Windenergieanlage;
- Fig. 7:: eine schematische Darstellung der Funktionsweise des erfindungsgemäßen Turnantriebs; und
- Fig. 8:: eine schematische Darstellung eines Datenloggers des erfindungsgemäßen Turnantriebs.

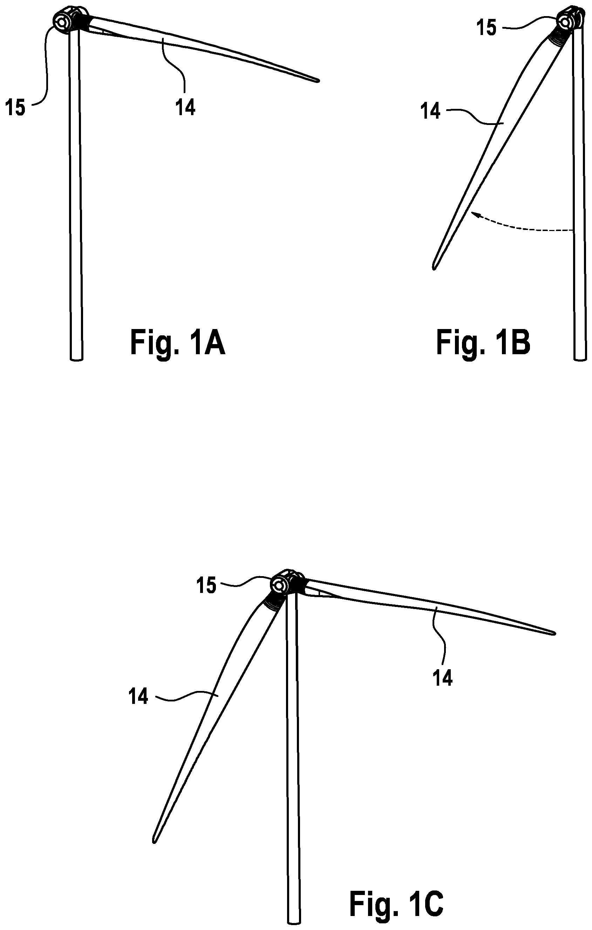

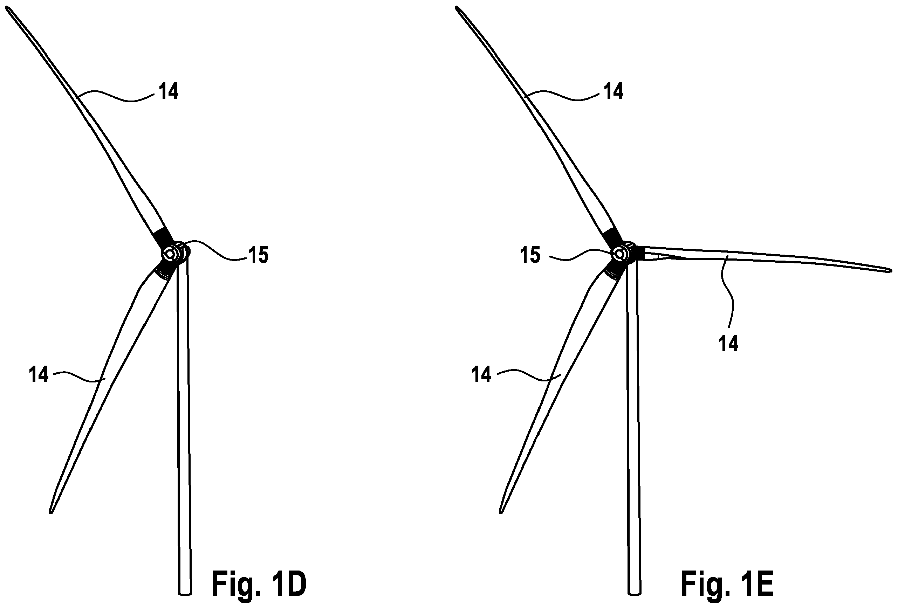

Eine in Fig. 1 gezeigte Windenergieanlage hat einen Rotor mit drei Rotorblättern 14. Beim Errichten der Windenergieanlage werden die Rotorblätter 14 nacheinander mit der Nabe 15 des Rotors verbunden. Für die Montage des ersten Rotorblatts 14 wird die Nabe 15 so gedreht, dass der Flansch für das Rotorblatt 14 aus Richtung der Gondel betrachtet waagerecht nach links zeigt (9-Uhr-Position). Das Rotorblatt 14 wird dann, wie in Fig. 1A gezeigt, horizontal an den Flansch herangeführt und mit einer Mehrzahl von Schrauben an den Flansch angeschlossen.

Im nächsten Schritt wird der Teilrotor 14, 15 um 120° gedreht, so dass der nächste Flansch die 9-Uhr-Position einnimmt, siehe Fig. 1B. Das zweite Rotorblatt 14 wird horizontal an den Flansch herangeführt und über eine Mehrzahl von Schrauben mit dem Flansch verbunden, siehe Fig. 1C. Nach einer weiteren Drehung des Teilrotors 14, 15 um 120° nimmt gemäß Fig. 1D der dritte Flansch die 9-Uhr-Position ein. Nach dem Anschluss des dritten Rotorblatts 14 an den Flansch ist der Rotor vollständig, siehe Fig. 1E.

Wenn nur ein Teil der Rotorblätter 14 mit der Nabe 15 verbunden ist, wirkt ein beträchtliches Drehmoment auf den Rotor. Dieses setzt sich zusammen aus einem statischen Drehmoment, das sich aus dem Gewicht der Rotorblätter 14 ergibt, sowie einer dynamischen Komponente, die aus den auf die Rotorblätter 14 wirkenden Kräften resultiert. Bei diesen Kräften handelt es sich insbesondere um die Windkräfte, die an den Rotorblättern 14 angreifen.

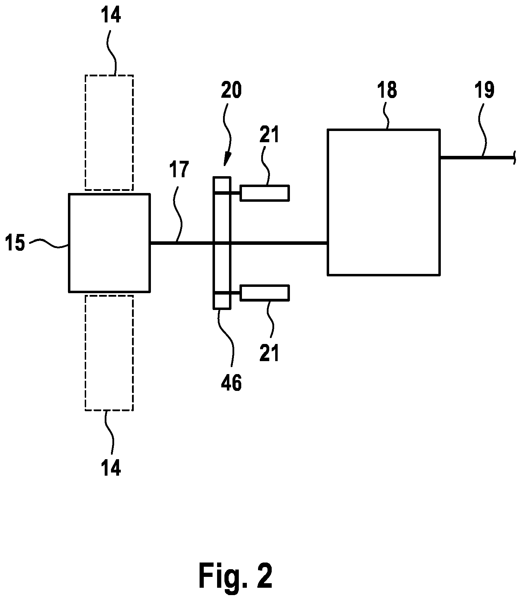

Gemäß Fig. 2 ist vorgesehen, den Rotor 14, 15 über ein Getriebe 18 mit einem nicht dargestellten Generator zu verbinden. Die Welle 17, die sich von dem Rotor 14, 15 bis zu dem Getriebe 18 erstreckt, ist zugleich die Rotorwelle und die langsame Getriebewelle. Die schnelle Getriebewelle 19 erstreckt sich vom Getriebe 18 in Richtung des nicht dargestellten Generators.

An die schnelle Getriebewelle 19 wird der erfindungsgemäße Turnantrieb angeschlossen. Der Turnantrieb dreht die schnelle Getriebewelle 19, was zu einer Rotation der Rotorwelle 17 führt, die entsprechend der Getriebeübersetzung langsamer ist. Dabei kann sich die schnelle Getriebewelle 19 beispielsweise mit einer Drehzahl von ca. 2 U/min drehen. Die Drehung der Rotorwelle 17 um 120° nimmt dann etwa 15 min in Anspruch.

Ist die Rotorwelle 17 in die passende Winkelposition für die Montage eines Rotorblatts 14 gebracht, wird die Rotorwelle mit einer Arretiervorrichtung 20 mechanisch gegenüber der Struktur der Windenergieanlage fixiert. Die Arretiervorrichtung 20 umfasst eine Scheibe 46, die fest mit der Rotorwelle 17 verbunden ist. In der Scheibe 46 ist eine Mehrzahl von Öffnungen ausgebildet, in die Bolzen 21 eingreifen können, die eine feste Verbindung zu der Struktur der Windenergieanlage haben. Wenn die Bolzen 21 in die Öffnungen eingefahren sind, ist die Rotorwelle 17 arretiert und das gesamte von dem Rotor 14, 15 ausgeübte Drehmoment wird in die Struktur der Windenergieanlage abgeleitet. Sind die Bolzen 21 aus den Öffnungen herausgezogen, kann die Rotorwelle 17 sich frei drehen und das gesamte Drehmoment des Rotors 14, 15 wird auf das Getriebe 18 übertragen.

Das Getriebe 18 ist so ausgelegt, dass es der Summe aus dem statischen und dynamischen Drehmoment des Rotors 14, 15 bis zu einer Windgeschwindigkeit von etwa 12 m/s standhalten kann. Steigt das Drehmoment über diesen Schwellwert hinaus an, etwa weil kurzfristig eine Bö auf die Rotorblätter 14 wirkt, besteht die Gefahr, dass das Getriebe 18 Schaden nimmt. Mit dem erfindungsgemäßen Turnantrieb wird sichergestellt, dass das Drehmoment jederzeit unterhalb dieser kritischen Schwelle bleibt.

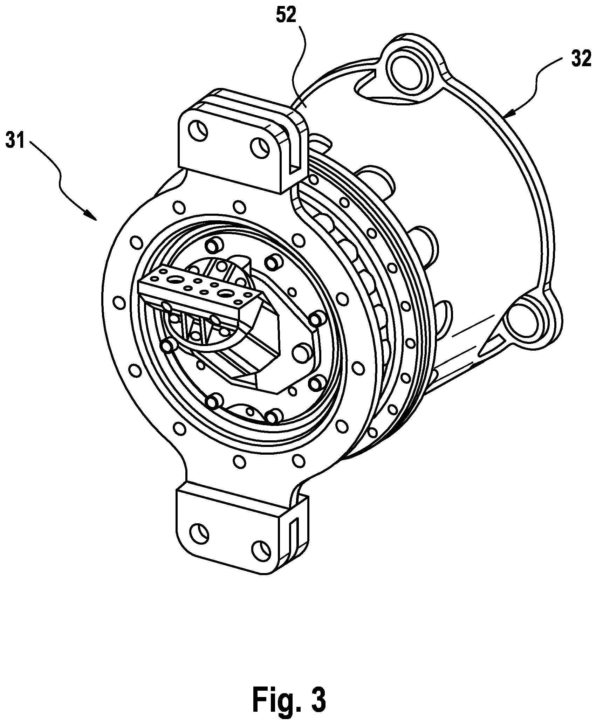

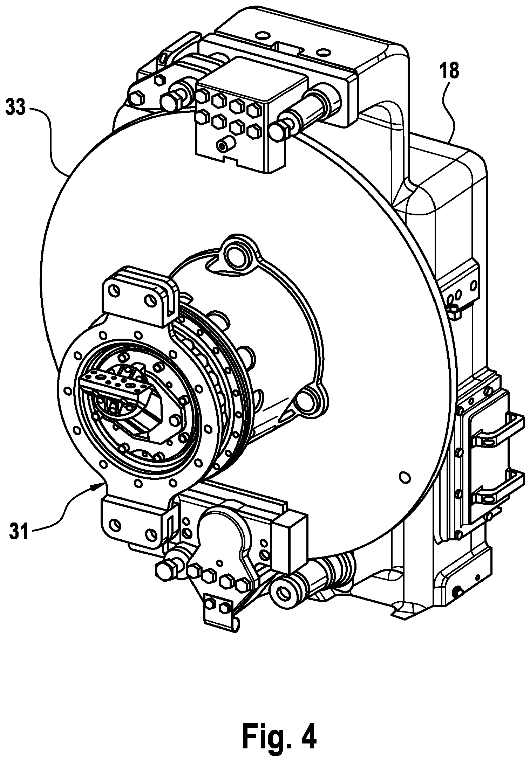

Zu dem Turnantrieb gehört eine in Fig. 3 gezeigte Antriebseinheit 31, in deren Innerem ein Hydromotor 27 und eine Lamellenbremse 28 angeordnet sind, die in Fig. 3 beide nicht sichtbar sind. Die Antriebseinheit 31 umfasst eine Welle 52 mit einem Flansch 32. Über den Flansch 32 kann die Welle 52 an eine Bremsscheibe 33 angeschlossen werden, die auf der schnellen Getriebewelle 19 sitzt. In Fig. 4 ist der Zustand gezeigt, in dem die Antriebseinheit 31 über drei Schrauben konzentrisch mit der Bremsscheibe 33 der Windenergieanlage verbunden ist.

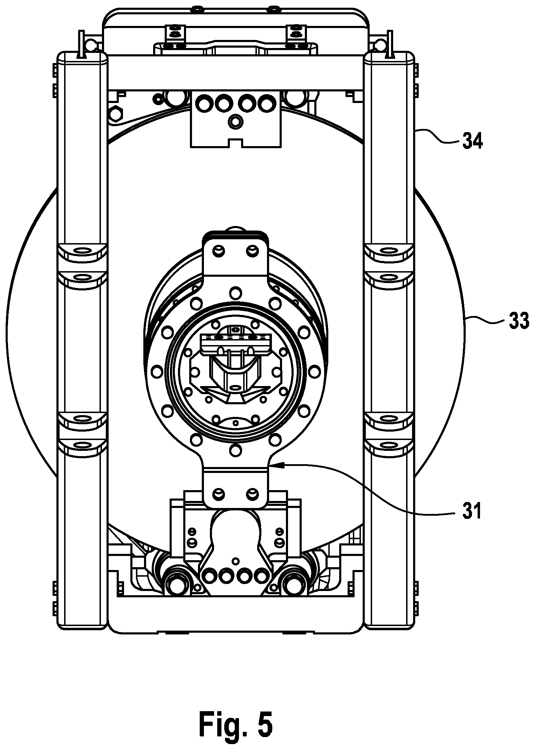

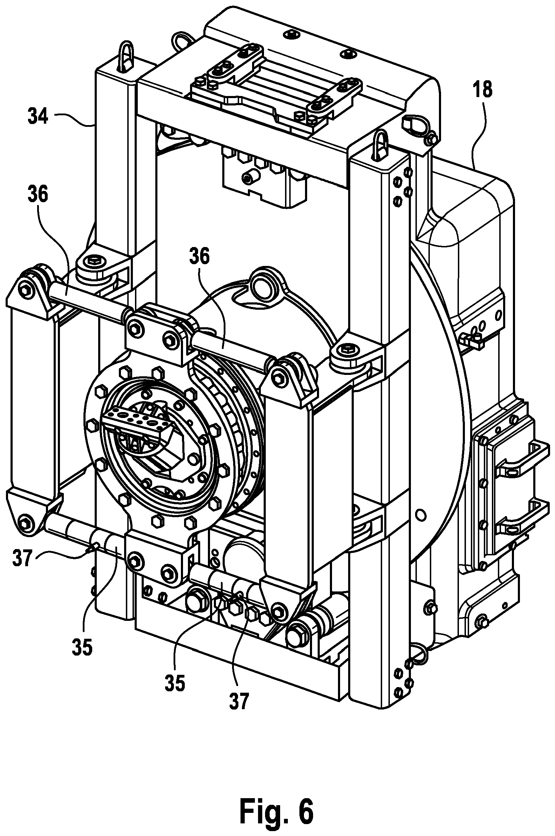

Anschließend wird eine Stütze 34 mit dem Gehäuse des Getriebes 18 verschraubt, siehe Fig. 5. Die mechanische Verbindung zwischen dem Gehäuse der Antriebseinheit 31 und der Stütze 34 wird gemäß Fig. 6 über vier Streben 35, 36 hergestellt. Das Drehmoment, das über die Streben 35, 36 auf die Stütze 34 übertragen wird, entspricht dem Drehmoment, das auf die schnelle Getriebewelle 19 wirkt. Die Streben 35 sind mit Drehmomentsensoren 37 versehen, mit denen dieses Drehmoment gemessen werden kann. In den Streben 35 werden die Kräfte hydraulisch übertragen. Die Drehmomentsensoren 35 ermitteln das Drehmoment, indem sie den Druck innerhalb der Streben 35 messen. Die Streben 35 können als Gelenkstäbe ausgeführt sein, so dass Querkräfte vermieden werden, falls der Turnantrieb nicht exakt zentrisch auf der Bremsscheibe sitzt.

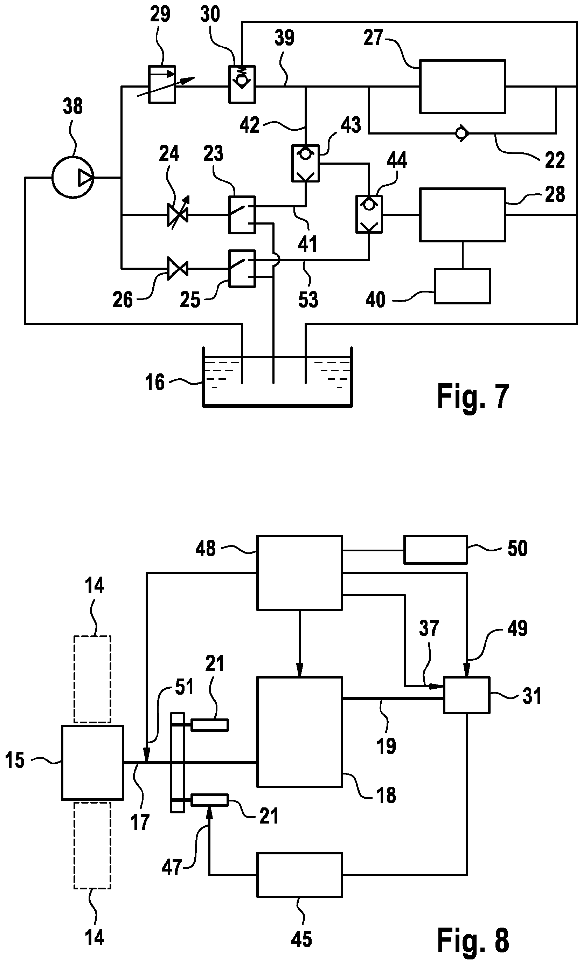

Der Turnantrieb umfasst gemäß der schematischen Darstellung der Fig. 7 außerdem ein Hydraulikaggregat 38, das dazu ausgelegt ist, die Antriebseinheit 31 aus einem Vorrat 16 mit unter Druck stehender Hydraulikflüssigkeit zu versorgen. Das Hydraulikaggregat 38 kann eine separate Einheit sein, die über Hydraulikleitungen mit der Antriebseinheit 31 verbunden ist. Von dem Hydraulikaggregat 38 wird die Hydraulikflüssigkeit über ein Proportionalventil 29 durch die Antriebsleitung 39 zu dem Hydromotor 27 geleitet. Durch die Hydraulikflüssigkeit wird die Welle 52 der Antriebseinheit 31 in Rotation versetzt, wobei das Drehmoment im Wesentlichen proportional ist zu dem Druck der Hydraulikflüssigkeit. Das Proportionalventil 29 ermöglicht einen kontinuierlichen Übergang zwischen einem geschlossenen und einem offenen Zustand, so dass der Fluss von Hydraulikflüssigkeit in Richtung des Hydromotors 27 mit dem Proportionalventil 29 präzise eingestellt werden kann. In Fig. 7 ist lediglich eine Antriebsleitung 39 mit einem Proportionalventil 29 gezeigt. Tatsächlich umfasst der Turnantrieb für jede der beiden Drehrichtungen eine Antriebsleitung 39 und ein Proportionalventil 29.

Wenn die Welle 52 sich dreht, überträgt sich die Drehung über die Bremsscheibe 33 und die schnelle Getriebewelle 19 auf die Rotorwelle 17. Der Rotor 14, 15 kann auf diese Weise also in eine zur Montage eines Rotorblatts 14 geeignete Winkelposition gebracht werden.

Das Drehmoment, das mit der Antriebseinheit 31 auf die schnelle Getriebewelle 19 aufgebracht wird, soll im vorliegenden Beispiel einen Schwellwert von 60 kNm nicht überschreiten. Oberhalb dieses Schwellwerts besteht das Risiko, dass das Getriebe 18 Schaden nimmt. Das Hydraulikaggregat 38 ist so ausgelegt, dass es einen Druck aufbauen kann, der einem Drehmoment von mehr als 60 kNm entspricht. Auch das von dem Rotor 14, 15 auf die schnelle Getriebewelle 19 ausgeübte Drehmoment kann kurzfristig oberhalb des Schwellwerts liegen, weswegen der Turnantrieb mit Mitteln zur Begrenzung des Drehmoments ausgerüstet ist.

In dem erfindungsgemäßen Turnantrieb ist in der Antriebsleitung 39, die sich von dem Hydraulikaggregat 38 bis zu dem Hydromotor 27 erstreckt, ein Druckbegrenzungsventil 30 vorgesehen. Steigt der Druck in der Antriebsleitung 39 so weit an, dass der Drehmoment-Schwellwert überschritten wird, öffnet das Druckbegrenzungsventil 30 und ein Teil der Hydraulikflüssigkeit wird an dem Hydromotor 27 vorbei zurück in den Vorrat 16 geleitet. Der Druck, bei dem das Druckbegrenzungsventil öffnet, kann beispielsweise 200 bar betragen. Damit ist sichergestellt, dass das von dem Hydromotor 27 ausgeübte Drehmoment den Drehmoment-Schwellwert zu keinem Zeitpunkt überschreitet.

In einem Hydromotor 27 gibt es konstruktionsbedingt einen Leckfluss, so dass der Hydromotor 27 ungeeignet ist, um den Rotor 14, 15 in einer Position zu arretieren. Die Antriebseinheit 31 ist deswegen zusätzlich mit einer Bremse ausgestattet, die im vorliegenden Beispiel als Lamellenbremse 40 ausgebildet ist. Die Lamellenbremse 40 wird über ein hydraulisches Stellglied 28 betätigt und umfasst ein mit der Welle 52 verbundenes Element sowie ein mit dem Gehäuse der Antriebseinheit 31 verbundenes Element, zwischen denen eine Reibschluss besteht, wenn die Lamellenbremse in Eingriff ist. Ist die Lamellenbremse 40 gelöst, können die beiden Elemente sich relativ zueinander drehen. Steht das Stellglied 28 unter Druck, ist die Lamellenbremse 40 gelöst, ohne Druck ist die Lamellenbremse 40 in Eingriff.

Mit der Lamellenbremse 40 kann der Rotor 14, 15 in einer beliebigen Winkelposition festgehalten werden. Die Lamellenbremse 40 ist ebenfalls so ausgelegt, dass sie ein oberhalb des Schwellwerts liegendes Drehmoment auf die schnelle Getriebewelle 19 aufbringen kann. Eine Begrenzung des Drehmoments wird erreicht, indem in der Bremsleitung 41, die sich von dem Hydraulikaggregat 38 bis zu dem Stellglied 28 erstreckt, ein einstellbarer Druckminderer 24 angeordnet ist. Der Druckminderer 24 wird so eingestellt, dass das Durchrutschmoment der Lamellenbremse 40 dem Drehmoment-Schwellwert entspricht. Beispielsweise kann der Druckminderer 24 auf 12 bar eingestellt sein. Damit ist sichergestellt, dass das Getriebe 18 durch die Lamellenbremse 40 nicht überlastet werden kann.

Sowohl der Hydromotor 27 als auch die Lamellenbremse 40 sind damit für sich genommen, auf den Drehmoment-Schwellwert begrenzt, den das Getriebe aushalten kann. Zusätzlich muss sichergestellt sein, dass das Drehmoment von dem Hydromotor 27 und der Lamellenbremse 40 sich nicht addieren können. Der erfindungsgemäße Turnantrieb ist zu diesem Zweck mit einer Verbindungsleitung 42 ausgestattet, die sich zwischen dem Hydromotor 27 und der Lamellenbremse 40 erstreckt. Die Verbindungsleitung 42 und die Bremsleitung 41 sind über ein Wechselventil 43 miteinander verbunden, so dass auf das Stellglied 28 der höhere der beiden Drücke wirkt.

Zur Veranschaulichung sei ein Zustand angenommen, in dem der Rotor mit der Lamellenbremse 40 in einer bestimmten Winkelposition gehalten ist, von der aus der Rotor 14, 15 mit dem Hydromotor 27 in eine andere Winkelposition gebracht werden soll. Es wird dann das Proportionalventil 29 langsam geöffnet, um dem Hydromotor 27 Hydraulikflüssigkeit zuzuführen. Sobald der Druck in der Antriebsleitung 39 größer ist als der Druck in der Bremsleitung 41 und der Hydromotor 27 also anfängt, sein Drehmoment aufzubauen, wirkt über das Wechselventil 43 und die Verbindungsleitung 42 der Druck aus der Antriebsleitung 39 auf das Stellglied 28. Im gleichen Maße, wie sich das Drehmoment des Hydromotors 27 aufbaut, vermindert sich das Durchrutschmoment der Lamellenbremse 40, so dass der Drehmoment-Schwellwert in Summe eingehalten wird. Das Umgekehrte gilt, wenn der Rotor 14, 15 mit dem Hydromotor 27 in die gewünschte Winkelposition gebracht wurde und der Rotor 14, 15 anschließend mit der Lamellenbremse 40 in dieser Winkelposition gehalten werden soll.

Das Durchrutschen stellt eine erhebliche Belastung für die Lamellenbremse 40 dar, der die Lamellenbremse 40 nur für einen begrenzten Zeitraum von beispielsweise 2 min standhalten kann. Es ist deswegen eine Hilfs-Bremsleitung 53 vorgesehen, mit der dem Stellglied 28 unter Umgehung des Druckminderers 24 Hydraulikflüssigkeit zugeführt werden kann. Die Hilfs-Bremsleitung 53 ist über ein Wechselventil 44 mit der Bremsleitung 41 gekoppelt, so dass der höhere der beiden Drücke auf das Stellglied 28 wirkt. Die Lamellenbremse 40 wird auf diesem Wege zwangsweise freigegeben, wenn die maximale Durchrutsch-Zeitspanne erreicht ist. Der Turnantrieb umfasst zu diesem Zweck eine in Fig. 7 nicht dargestellte Steuerung 45, die das Wegeventil 25 entsprechend betätigt.

Gleichzeitig mit dem Freigeben der Lamellenbremse 40 stellt die Steuerung 45 das Proportionalventil 29 so ein, dass der Hydromotor 27 der schnellen Getriebewelle 19 ein Drehmoment entgegensetzt. Das Drehmoment des Hydromotors 27 wird kontinuierlich erhöht, bis es dem Drehmoment-Schwellwert entspricht. Ohne dass der Turnantrieb Schaden nimmt, kann der Teilrotor 14, 15 sich in diesem Zustand notfalls so lange drehen, bis beispielsweise das eine Rotorblatt 14 bzw. die beiden Rotorblätter 14 nach unten zeigen.

Bevor der Rotor 14, 15 über den Turnantrieb in Drehung versetzt wird, wird eine Getriebevorbereitungsphase durchgeführt. Dazu wird die Rotorwelle 17 mit Hilfe eines internen Antriebs innerhalb von 25 min um fünf volle Umdrehungen gedreht. Die Pumpe, mit der Getriebeöl umgewälzt wird, ist in dieser Phase in Betrieb, so dass Getriebeöl in Bewegung gehalten wird und sich erwärmt.

Der erfindungsgemäße Turnantrieb soll in dieser Phase so widerstandsfrei wie möglich mit drehen. Die Antriebseinheit 31 umfasst zu diesem Zweck eine Kurzschlussleitung 22, so dass der Hydromotor 27 die Hydraulikflüssigkeit in einem direkten Kreislauf fördern kann. Außerdem ist das Stellglied 28 über die Hilfs-Bremsleitung 53 unter Druck gesetzt, so dass die Lamellenbremse 40 vollständig freigegeben ist.

Nach der Getriebevorbereitungsphase kann der Einsatz des erfindungsgemäßen Turnantriebs beginnen. Die Steuerung 45 gibt zunächst einen Steuerbefehl an das Wegeventil 25, die Hilfs-Bremsleitung 53 zu unterbrechen. Das Stellglied 28 wird damit drucklos geschaltet und die Lamellenbremse 40 kommt in Eingriff. Als nächstes geht ein Steuerbefehl an das Wegeventil 23, die Bremsleitung 41 zu verbinden. Über die Wechselventile 43, 44 wirkt der Druck aus der Bremsleitung 41 auf das Stellglied 28. Im nächsten Schritt wird der einstellbare Druckminderer 24 so justiert, dass das Durchrutschmoment der Lamellenbremse 40 dem Drehmoment-Schwellwert entspricht, mit dem das Getriebe 18 maximal belastet werden darf.

Der eigentliche Betrieb des Turnantriebs beginnt, indem das Proportionalventil 29 unter der Kontrolle der Steuerung 45 langsam geöffnet wird. Der Druck in der Antriebsleitung 39 steigt an und der Hydromotor 27 beginnt, ein Drehmoment aufzubauen. Parallel dazu wirkt der Druck aus der Antriebsleitung 39 über die Wechselventile 43, 44 auf das Stellglied 28, so dass das Durchrutschmoment der Lamellenbremse 40 kontinuierlich absinkt. Die Summe aus dem Drehmoment des Hydromotors 27 und dem Drehmoment (Durchrutschmoment) der Lamellenbremse 40 ist stets kleiner als der Drehmoment-Schwellwert. Sobald ein hinreichender Druck in der Antriebsleitung 39 anliegt, ist die Lamellenbremse 40 vollständig frei, und es wirkt nur das Drehmoment des Hydromotors 27 auf die schnelle Getriebewelle 19. In diesem Betriebszustand bleibt der Turnantrieb, bis sich der Rotor 14, 15 in die gewünschte Winkelposition gedreht hat. Dreht sich beispielsweise die schnelle Getriebewelle 19 mit 2 U/min, dauert es etwa 15 min, um die Rotorwelle um 120° zu drehen. Ist der Rotor 14, 15 in der gewünschten Winkelposition angekommen, wird das Proportionalventil 29 geschlossen und es wirkt wieder die Lamellenbremse 40 mit dem eingestellten Durchrutschmoment auf die schnelle Getriebewelle 19.

In dieser Position wird die Rotorwelle 17 mit der Arretiervorrichtung 20 arretiert, so dass das Getriebe 18 lastfrei ist. Ist die Rotorwelle 17 arretiert, kann die Lamellenbremse 40 vollständig freigegeben werden. Während der Montage des Rotorblatts 14 bleibt die Rotorwelle 17 arretiert.

Nach der Montage des Rotorblatts 14 steht die Arretiervorrichtung 20 unter großer Last. Die Arretiervorrichtung 20 muss zunächst mit dem Turnantrieb entlastet werden, bevor die Arretiervorrichtung gelöst werden kann. Unter der Kontrolle der Steuerung 45 wird das für die betreffende Drehrichtung zuständige Proportionalventil 29 langsam geöffnet, so dass sich die Rotorwelle 17 entgegen dem Gewicht des Rotorblatts 14 dreht. Die Arretiervorrichtung 20 umfasst gemäß Fig. 8 einen Sensor 47 für den Lastzustand der Bolzen 21. Das Signal von dem Sensor 47 wird über einen zugehörigen Signaleingang der Steuerung 45 zugeführt. Die Steuerung 45 stoppt den Hydromotor 27, sobald die Bolzen 21 lastfrei sind, und bringt die Lamellenbremse 40 mit dem eingestellten Durchrutschmoment in Eingriff. Die Arretiervorrichtung 20 kann jetzt von einer Bedienperson entriegelt werden. Tritt in dieser Phase eine Bö auf, kann das auf die Rotorwelle 17 wirkende Drehmoment über das Durchrutschmoment hinaus ansteigen und die Rotorwelle 17 beginnt, sich zu drehen. Dies kann Schäden an der Arretiervorrichtung 20 zur Folge haben, die zum Schutz des Getriebes 18 in Kauf genommen werden.

Nach dem Entriegeln der Arretiervorrichtung 20 wird der Hydromotor 27 in der entgegengesetzten Richtung in Gang gesetzt, um die Rotorwelle 17 um 120° zu drehen, so dass das nächste Rotorblatt 14 montiert werden kann. Der beschriebene Ablauf wird noch ein weiteres Mal wiederholt, bis alle drei Rotorblätter 14 montiert sind.

Es kann vorkommen, dass zwischen der Montage zweier Rotorblätter 14 eine Pause erforderlich wird, beispielsweise weil die Nacht anbricht oder die Wetterbedingungen sich verschlechtern. In diesem Fall wird die Windenergieanlage in einen Ruhezustand gebracht, in dem der Teilrotor 14, 15 in einem stabilen Gleichgewicht ist. Bei einem Teilrotor 14, 15 mit einem Rotorblatt 14 bedeutet dies, dass das Rotorblatt 14 senkrecht nach unten weist. Bei einem Teilrotor 14, 15 mit zwei Rotorblättern 14 schließen die beiden Rotorblätter 14 jeweils einen Winkel von 60° mit der nach unten weisenden Vertikalen ein. In dem Ruhezustand kann die Windenergieanlage bei Bedarf auch für einen längeren Zeitraum bleiben.

Die Zeitspanne bis zur Montage des nächsten Rotorblatts 14 ist regelmäßig so lang, dass das Getriebe 18 wieder vollständig abgekühlt ist. Es ist also eine erneute Getriebevorbereitungsphase erforderlich, bevor das Getriebe 18 großen Drehmomenten ausgesetzt wird. Dazu wird der Teilrotor 14, 15 mit dem Turnantrieb zunächst um einen vorgegebenen Winkel, beispielsweise 10°, entgegen der eigentlichen Drehrichtung gedreht. Dann wird die Drehrichtung umgekehrt und der Teilrotor 14, 15 so weit gedreht, dass der Blattanschluss für die Montage des nächsten Rotorblatts 14 in die 9-Uhr-Position kommt. Indem der Teilrotor 14, 15 zunächst um 10° in die eine Richtung, dann zurück in die 0°-Position und dann weiter um 10° in die andere Richtung gedreht wird, findet insgesamt eine Drehung um 30° statt, in der das Getriebe 18 nur geringen Lasten ausgesetzt ist. Dies reicht aus, um das Getriebeöl zu erwärmen und das Getriebe 18 betriebsbereit zu machen. Der überwiegende Teil der Drehung zum Erreichen der 9-Uhr-Position wird dann mit bereits vorgewärmtem Getriebeöl durchgeführt.

Zum Zwecke der Dokumentation umfasst der Turnantrieb einen Datenlogger 48, der während der Montage der Rotorblätter 14 verschiedene Daten aufzeichnet, die einen Rückschluss auf die Belastungen erlauben, denen das Getriebe 18 ausgesetzt war. Es kann ausreichen, wenn die Daten lediglich in den Phasen aufgezeichnet werden, in denen der Turnantrieb in Betrieb ist und die Arretiervorrichtung 20 gelöst ist. Für eine umfassende Dokumentation ist es jedoch besser, wenn die Daten während des gesamten Vorgangs der Montage der Rotorblätter 14 aufgezeichnet werden.

Der Datenlogger 48 ist zunächst verbunden mit dem Drehmomentsensor 37, der das zwischen der Antriebseinheit 31 und der Stütze 34 übertragene Drehmoment misst. Außerdem ist der Datenlogger 48 angeschlossen an einen Drucksensor 49, der den Druck der Hydraulikflüssigkeit in dem Hydromotor 27 misst. Da dieser Druck in Wesentlichen proportional zu dem von dem Hydromotor 27 aufgebrachten Drehmoment ist, erlaubt der Druck unmittelbare Rückschlüsse auf die Belastung des Getriebes 18. Außerdem aufgezeichnet werden die mit einem Anemometer 50 gemessenen Informationen über die Windgeschwindigkeit und die Windrichtung. Mit einem weiteren Sensor 51 wird die Winkelposition der Rotorwelle 17 aufgezeichnet. In der Summe dieser Daten liegt eine umfassende Dokumentation über die Belastungen vor, denen das Getriebe 18 bei der Montage der Rotorblätter ausgesetzt war.

## Patentansprüche

1. Turnantrieb für eine Windenergieanlage, umfassend eine Welle (52), einen Hydromotor (27) zum Antreiben der Welle (52) und eine Antriebsleitung (39), um dem Hydromotor (27) eine unter Druck stehende Hydraulikflüssigkeit zuzuführen, wobei die Antriebsleitung (39) mit einem einstellbaren Druckbegrenzungsventil (30) versehen ist, **dadurch gekennzeichnet, dass** der Turnantrieb zum Anschließen an eine schnelle Welle (19) eines Getriebes der Windenergieanlage vorgesehen ist und eine mechanische Bremse (40) für die Welle (52) vorgesehen ist, wobei die Bremse (40) auf ein vorgegebenes Durchrutschmoment einstellbar ist.

2. Turnantrieb nach Anspruch 1, **dadurch gekennzeichnet, dass** die Bremse (40) ein hydraulisches Stellglied (28) aufweist, wobei an das Stellglied (28) eine Hydraulikflüssigkeit führende Bremsleitung (41) angeschlossen ist und wobei die Bremse (40) gelöst wird, wenn die Hydraulikflüssigkeit unter Druck steht.

3. Turnantrieb nach Anspruch 2, **dadurch gekennzeichnet, dass** in der Bremsleitung (41) ein einstellbarer Druckminderer (24) angeordnet ist.

4. Turnantrieb nach einem der Ansprüche 1 bis 3, **dadurch gekennzeichnet, dass** eine Verbindungsleitung (42) zwischen dem Hydromotor (27) und der Bremse (40) besteht.

5. Turnantrieb nach Anspruch 4, **dadurch gekennzeichnet, dass** die Verbindungsleitung (42) und die Bremsleitung (41) über ein Wechselventil (43) miteinander verbunden sind, so dass auf das Stellglied (28) der höhere der beiden Drücke wirkt.

6. Turnantrieb nach einem der Ansprüche 1 bis 5, **dadurch gekennzeichnet, dass** eine Hilfs-Bremsleitung (53) sich zu dem Stellglied (28) erstreckt, um dem Stellglied (28) unter Umgehung des einstellbaren Druckminderers (24) Hydraulikflüssigkeit zuzuführen.

7. Turnantrieb nach einem der Ansprüche 1 bis 6, **dadurch gekennzeichnet, dass** der Hydromotor (27) mit einer Kurzschlussleitung (22) ausgestattet ist.

8. Turnantrieb nach einem der Ansprüche 1 bis 7, **gekennzeichnet durch** einen Drehmomentsensor (37) für das zwischen einer Antriebseinheit (31) des Turnantriebs und einer Struktur der Windenergieanlage übertragene Drehmoment.

9. Turnantrieb nach einem der Ansprüche 2 bis 8, **gekennzeichnet durch** einen Druckspeicher für den Druck in der Bremsleitung (41) und/oder den Druck in der Hilfs-Bremsleitung (53).

10. Turnantrieb nach einem der Ansprüche 1 bis 9, **gekennzeichnet durch** eine Steuerung (45) mit einem Signaleingang für ein Signal über den Zustand einer Arretiervorrichtung (20) der Rotorwelle (17).

11. Turnantrieb nach einem der Ansprüche 1 bis 10, **dadurch gekennzeichnet, dass** ein Datenlogger (48) vorgesehen ist, der beim Betrieb des Turnantriebs eine oder mehrere der folgenden Informationen aufzeichnet:
a. Druck der Hydraulikflüssigkeit in dem Hydromotor (27);
b. Drehmoment zwischen dem Hydromotor (27) und der Struktur der Windenergieanlage;
c. Öltemperatur des Getriebes (18) der Windenergieanlage;
d. Windgeschwindigkeit und Windrichtung;
e. Winkelposition der Rotorwelle (17) der Windenergieanlage;

12. Anordnung aus einem Getriebe einer Windenergieanlage und einem Turnantrieb nach einem der Ansprüche 1 bis 11, **dadurch gekennzeichnet, dass** die Welle (52) des Turnantriebs mit der schnellen Welle (19) des Getriebes (18) in Eingriff steht.

13. Anordnung nach Anspruch 12, **dadurch gekennzeichnet, dass** die Welle (52) des Turnantriebs konzentrisch zu der schnellen Getriebewelle (19) ausgerichtet ist.

14. Verfahren zum Drehen der Rotorwelle (17) einer Windenergieanlage, wobei die Rotorwelle (17) an ein Getriebe (18) der Windenergieanlage angeschlossen ist, wobei ein Turnantrieb nach einem der Ansprüche 1 bis 11 an die schnelle Welle (19) des Getriebes (18) angeschlossen wird, wobei der Turnantrieb mit einem Hydromotor (27) ausgestattet ist und eine für die Welle (19) vorgesehene mechanische Bremse (40) aufweist, wobei ein Druckbegrenzungsventil (30) in einer Antriebsleitung (39) des Hydromotors (27) auf einen vorgegebenen Schwellwert eingestellt wird, um das auf das Getriebe (18) übertragbare Drehmoment zu begrenzen, und eine unter Druck stehende Hydraulikflüssigkeit zu dem Hydromotor (27) zugeführt wird, wobei das Druckbegrenzungsventil (30) öffnet, wenn der Druck der Hydraulikflüssigkeit den vorgegebenen Schwellwert überschreitet.

## Claims

1. Turn drive for a wind power plant, comprising a shaft (52), a hydraulic motor (27) for driving the shaft (52), and a drive line (39), in order to feed a pressurized hydraulic liquid to the hydraulic motor (27), the drive line (39) being provided with an adjustable pressure limiting valve (30), **characterized in that** the turn drive is provided for connecting to a fast shaft (19) of a transmission of the wind power plant, and a mechanical brake (40) is provided for the shaft (52), the brake (40) being settable to a predefined slip torque.

2. Turn drive according to Claim 1, **characterized in that** the brake (40) has a hydraulic actuator (28), a brake line (41) which conducts a hydraulic liquid being connected to the actuator (28), and the brake (40) being released if the hydraulic liquid is pressurized.

3. Turn drive according to Claim 2, **characterized in that** an adjustable pressure reducer (24) is arranged in the brake line (41).

4. Turn drive according to one of Claims 1 to 3, **characterized in that** there is a connecting line (42) between the hydraulic motor (27) and the brake (40).

5. Turn drive according to Claim 4, **characterized in that** the connecting line (42) and the brake line (41) are connected to one another via a shuttle valve (43), with the result that the higher of the two pressures acts on the actuator (28).

6. Turn drive according to one of Claims 1 to 5, **characterized in that** an auxiliary brake line (53) extends to the actuator (28), in order to feed hydraulic liquid to the actuator (28) while bypassing the adjustable pressure reducer (24).

7. Turn drive according to one of Claims 1 to 6, **characterized in that** the hydraulic motor (27) is equipped with a short-circuit line (22).

8. Turn drive according to one of Claims 1 to 7, **characterized by** a torque sensor (37) for the torque which is transmitted between a drive unit (31) of the turn drive and a structure of the wind power plant.

9. Turn drive according to one of Claims 2 to 8, **characterized by** a pressure accumulator for the pressure in the brake line (41) and/or the pressure in the auxiliary brake line (53).

10. Turn drive according to one of Claims 1 to 9, **characterized by** a controller (45) with a signal input for a signal about the state of a locking apparatus (20) of the rotor shaft (17).

11. Turn drive according to one of Claims 1 to 10, **characterized in that** a data logger (48) is provided which records one or more of the following information items during the operation of the turn drive:
a. pressure of the hydraulic liquid in the hydraulic motor (27);
b. torque between the hydraulic motor (27) and the structure of the wind power plant;
c. oil temperature of the transmission (18) of the wind power plant;
d. wind speed and wind direction;
e. angular position of the rotor shaft (17) of the wind power plant.

12. Arrangement comprising a transmission of a wind power plant and a turn drive according to one of Claims 1 to 11, **characterized in that** the shaft (52) of the turn drive is in engagement with the fast shaft (19) of the transmission (18).

13. Arrangement according to Claim 12, **characterized in that** the shaft (52) of the turn drive is oriented concentrically with respect to the fast transmission shaft (19).

14. Method for turning the rotor shaft (17) of a wind power plant, the rotor shaft (17) being connected to a transmission (18) of the wind power plant, a turn drive according to one of Claims 1 to 11 being connected to the fast shaft (19) of the transmission (18), the turn drive being equipped with a hydraulic motor (27) and having a mechanical brake (40) which is provided for the shaft (19), a pressure limiting valve (30) in a drive line (39) of the hydraulic motor (27) being set to a predefined threshold value, in order to limit the torque which can be transmitted to the transmission (18), and a pressurized hydraulic liquid being fed to the hydraulic motor (27), the pressure limiting valve (30) opening if the pressure of the hydraulic liquid exceeds the predefined threshold value.

## Revendications

1. Entraînement rotatif pour une éolienne, comprenant un arbre (52), un moteur hydraulique (27) pour entraîner l'arbre (52) et une conduite d'entraînement (39) pour alimenter un liquide hydraulique sous pression vers le moteur hydraulique (27), dans lequel la conduite d'entraînement (39) est pourvue d'une soupape de limitation de pression (30) réglable, **caractérisé en ce que** l'entraînement rotatif est destiné à être relié à un arbre rapide (19) d'un engrenage de l'éolienne et **en ce qu'**il est prévu un frein mécanique (40) pour l'arbre (52), dans lequel le frein (40) peut être réglé sur un couple de glissement prédéterminé.

2. Entraînement rotatif selon la revendication 1, **caractérisé en ce que** le frein (40) comporte un organe de réglage hydraulique (28), dans lequel une conduite de frein (41) transportant un liquide hydraulique est raccordée à l'organe de réglage (28) et dans lequel le frein (40) est relâché lorsque le liquide hydraulique est sous pression.

3. Entraînement rotatif selon la revendication 2, **caractérisé en ce qu'**un réducteur de pression réglable (24) est disposé dans la conduite de frein (41).

4. Entraînement rotatif selon l'une des revendications 1 à 3, **caractérisé en ce qu'**une conduite de liaison (42) est prévue entre le moteur hydraulique (27) et le frein (40) .

5. Entraînement rotatif selon la revendication 4, **caractérisé en ce que** la conduite de liaison (42) et la conduite de frein (41) sont reliées entre elles par le biais d'une soupape à deux voies (43), de telle façon que la plus élevée des deux pressions agit sur l'organe de réglage (28).

6. Entraînement rotatif selon l'une des revendications 1 à 5, **caractérisé en ce qu'**une conduite de frein auxiliaire (53) s'étend vers l'organe de réglage (28), pour alimenter l'organe de réglage (28) en liquide hydraulique en contournant le réducteur de pression réglable (24).

7. Entraînement rotatif selon l'une des revendications 1 à 6, **caractérisé en ce que** le moteur hydraulique (27) est équipé d'une conduite de court-circuit (22).

8. Entraînement rotatif selon l'une des revendications 1 à 7, **caractérisé par** un capteur de couple de rotation (37) pour le couple de rotation transmis entre une unité d'entraînement (31) de l'entraînement rotatif et une structure de l'éolienne.

9. Entraînement rotatif selon l'une des revendications 2 à 8, **caractérisé par** un accumulateur de pression pour la pression dans la conduite de frein (41) et/ou la pression dans la conduite de frein auxiliaire (53).

10. Entraînement rotatif selon l'une des revendications 1 à 9, **caractérisé par** une commande (45) avec une entrée de signal pour un signal relatif à l'état d'un dispositif d'arrêt (20) de l'arbre de rotor (17).

11. Entraînement rotatif selon l'une des revendications 1 à 10, **caractérisé en ce qu'**il est prévu un enregistreur de données (48) enregistrant une ou plusieurs des informations suivantes pendant le fonctionnement de l'entraînement rotatif :
a. la pression du liquide hydraulique dans le moteur hydraulique (27) ;
b. le couple de rotation entre le moteur hydraulique (27) et la structure de l'éolienne ;
c. la température de l'huile de l'engrenage (18) de l'éolienne ;
d. la vitesse du vent et la direction du vent ;
e. la position angulaire de l'arbre de rotor (17) de l'éolienne ;

12. Dispositif constitué d'un engrenage d'une éolienne et d'un entraînement rotatif selon l'une des revendications 1 à 11, **caractérisé en ce que** l'arbre (52) de l'entraînement rotatif est en prise avec l'arbre rapide (19) de l'engrenage (18).

13. Dispositif selon la revendication 12, **caractérisé en ce que** l'arbre (52) de l'entraînement rotatif est orienté de façon concentrique par rapport à l'arbre de transmission rapide (19).

14. Procédé pour la rotation de l'arbre de rotor (17) d'une éolienne, dans lequel l'arbre de rotor (17) est relié à un engrenage (18) de l'éolienne, dans lequel un entraînement rotatif selon l'une des revendications 1 à 11 est relié à l'arbre rapide (19) de l'engrenage (18), dans lequel l'entraînement rotatif est équipé d'un moteur hydraulique (27) et comporte un frein mécanique (40) destiné à l'arbre (19), dans lequel une soupape de limitation de pression (30) est réglée sur une valeur seuil prédéfinie dans une conduite d'entraînement (39) du moteur hydraulique (27), afin de limiter le couple de rotation transmissible à l'engrenage (18), et un liquide hydraulique sous pression est alimenté vers le moteur hydraulique (27), dans lequel la soupape de limitation de pression (30) s'ouvrant lorsque la pression (30) du liquide hydraulique dépasse la valeur seuil prédéfinie.
